# EUROPÄISCHE PATENTSCHRIFT

(11) **EP 3 323 686 B1**
(45) Veröffentlichungstag und Bekanntmachung des Hinweises auf die Patenterteilung: **11.03.2020**
(21) Anmeldenummer: 17197226.8
(22) Anmeldetag: 19.10.2017
(51) Int. Cl.: B60T 17/22, B61H 7/08

(54) **WIRKÜBERWACHUNG EINER MAGNETSCHIENENBREMSE**
MONITORING OF THE EFFECTIVENESS OF A MAGNETIC RAIL BRAKE
SURVEILLANCE ACTIVE D'UN FREIN À RAIL MAGNÉTIQUE

(30) Priorität: 09.11.2016 DE 102016121458
(43) Veröffentlichungstag der Anmeldung: 23.05.2018
(73) Patentinhaber: Bombardier Transportation GmbH, 10785 Berlin (DE)
(72) Erfinder: Reimann, Gunnar, 16547 Birkenwerder (DE)
(74) Vertreter: Cohausz & Florack

(56) Entgegenhaltungen:
- EP-A2- 1 177 962
- EP-A2- 2 399 799
- WO-A2-2013/034693
- DE-A1-102012 014 158

## Beschreibung

Die vorliegende Erfindung betrifft insbesondere ein Verfahren und Vorrichtungen zur Wirküberwachung, insbesondere Funktionsprüfung und/oder Verschleißprüfung, einer Magnetschienenbremse.

Es ist bekannt, Magnetschienenbremsen (Mg-Bremsen) als Bremsen für Schienenfahrzeuge einzusetzen. Magnetschienenbremsen werden in der Regel bei Vollbahnen, Hauptbahnen oder auch Nebenbahnen eingesetzt, insbesondere bei Schienenfahrzeugen welche für Geschwindigkeiten von über 140 km/h ausgelegt sind, beispielsweise bis zu 160 km/h.

Die Magnetschienenbremse ist eine zusätzliche Bremseinrichtung, die unmittelbar auf die Schienen wirkt. Dadurch ist sie nicht vom Haftwert zwischen Rad und Schiene abhängig. Eine Magnetschienenbremse umfasst in der Regel einen oder mehrere Schleifschuhe oder Polschuhe, welche die Funktion eines Reibelements übernehmen, mit einem eingebauten Magneten. Die magnetische Anzugskraft kann dabei durch Dauermagnete oder bevorzugt elektrisch erzeugt werden. Die Reibelemente der Magnetschienenbremse bestehen beispielsweise aus Stahl, Gusseisen oder ferromagnetischen Sintermaterialen bzw. Kombinationen davon. Insbesondere bei Vollbahnen erfolgt die Implementierung einer Magnetschienenbremse als Hochaufhängung oder in der Hochlagenbauform. Dabei wird der Schleifschuh der Magnetschienenbremse mit integriertem Elektromagnet durch Federn in einer vorbestimmten Höhe über den Schienen gehalten (Hochlage). Für den Bremsvorgang werden die Federkräfte durch eine pneumatische Betätigungseinrichtung überwunden und die Schleifschuhe aus der Hochlage auf die Schiene abgesenkt. Gleichzeitig wird der Elektromagnet eingeschaltet. Bei Stromdurchfluss durch den Elektromagneten wird der Schleifschuh an die Schiene gezogen. Dadurch entsteht hauptsächlich eine bremsende Reibungskraft. Die Wirkung der Magnetschienenbremse beruht also primär auf Reibung infolge magnetischer Anzugskraft auf der Schiene. Zusätzlich tritt eine Wirbelstrominduktion in der Schiene auf, die eine der Bewegung entgegenwirkende Kraft erzeugt. Durch die bremsende Reibungskraft unterliegt eine Magnetschienenbremse einem Verschleiß. Dies kann eine regelmäßige durchzuführende Wirküberwachung der Magnetschienenbremse erfordern.

Hinzu kommt, dass Magnetschienenbremsen in der Regel zur Ergänzung der haftwertabhängigen Bremseinrichtung in die Fahrwerke eingebaut werden. Die Magnetschienenbremse kann so beispielsweise bei Schnell-, Not-, Zwangsbremsungen oder bei Gefahrbremsungen automatisch aktiviert werden. Damit ist sie in der Regel ein Bestandteil des Bremsleistungskonzeptes und unterliegt so besonderen Sicherheits- und Zuverlässigkeitsanforderungen hinsichtlich ihrer Wirkbereitschaft. Werden diese erfüllt, kann sie auf das Bremsgewicht des Schienenfahrzeugs angerechnet werden. Unter dem Bremsgewicht wird dabei eine Kennzahl als Maß für das Bremsvermögen verstanden. Aus dem Bremsgewicht einzelner Fahrzeuge kann bei der Zusammenstellung eines Zugverbunds durch Addition aller Bremsgewichte ein gesamtes Bremsgewicht ermittelt werden, um daraus die Bremshundertstel zu bestimmen, wovon ein bestimmter Wert in Abhängigkeit von Streckenprofil und angestrebter Höchstgeschwindigkeit erreicht werden muss.

Entscheidend ist jedoch insbesondere der Aspekt der Anrechenbarkeit der Magnetschienenbremse auf das Bremsgewicht. Denn um die Sicherheits- und Zuverlässigkeitsanforderungen zu erfüllen, ist es auch hier erforderlich, dass eine regelmäßige Wirküberwachung der Magnetschienenbremse erfolgt.

Um zuverlässige Aussagen über die Funktion und den Zustand der Magnetschienenbremse, insbesondere die Zustände "abgesenkt" und "bestromt", welche für die Funktionserfüllung der Magnetschienenbremse wichtig sind, zu machen, ist jedoch eine zusätzliche Sensorik und/oder Elektronik notwendig. So kann beispielsweise ein Endlagenschalter vorgesehen werden, welcher ein Verlassen oder Erreichen der Hochlage detektieren kann. Zusätzlich muss über ein Mindeststromrelais die Bestromung der Elektromagnete der Magnetschienenbremse erfasst werden. Alternativ wäre auch denkbar, dass eine elektronische Aufsetzerkennung, die eine Annäherung des Magneten an die Schiene überwacht und gleichzeitig die Bestromung sicherstellt, vorgesehen sind. Dabei ist eine separate Auswerteelektronik mit Sensoren für die Aufnahme des Stromverlaufs erforderlich.

Aus der DE 10 2012 014 158 A1 ist beispielsweise ein Verfahren zur Überprüfung des tatsächlichen Aufliegens der wirkenden Magnete einer Magnetschienenbremse für Schienenfahrzeuge auf der Schienenoberfläche im Rahmen einer Bremsprobe bekannt. Das Verfahren kann sowohl bei Stillstand des Schienenfahrzeugs, als auch zur Überprüfung der Funktionsfähigkeit der Magnetschienenbremse während der Fahrt durchgeführt werden. Um das Verfahren für derzeit marktübliche Magnetschienenbremsen möglichst ohne zusätzliche Sensorik und komplizierte Signalanalyse durchzuführen, sollen die Verhältnisse zwischen den auf die Polschuhe ausübbaren Kräften ausgenutzt und die Kräfte in einen zeitlichen Zusammenhang gebracht werden. Es wird vorgeschlagen, den Wirkstrom der Magnete in der Magnetschienenbremse während der Absenkphase einzuschalten und die Luft aus den Absenkzylindern abzulassen. Falls innerhalb eines Prüfzeitraums kein Hochlagenschalter der Steuereinheit meldet, dass die Magnetschienenbremse in die Hochlage zurückgekehrt ist, wird von einer funktionsfähigen Magnetschienenbremse ausgegangen. Somit ist jedoch auch hier zumindest ein Hochlagenschalter notwendig, um die Wirküberwachung der Magnetschienenbremse durchführen zu können.

Gemäß einem alternativen Ansatz ist es aus dem Stand der Technik bekannt, mittels des durch die Elektromagnete der Magnetschienenbremse fließenden Stroms auf die Funktionsfähigkeit der Magnetschienenbremse zu schließen.

So ist beispielsweise aus der DE 10 2008 059 882 B4 eine Überwachung einer Magnetschienenbremse an Schienenfahrzeugen bekannt, wobei die Magnetschienenbremse mit einer Spannungsquelle zur Bestromung verbunden ist. Der Stromkreis zur Bestromung der Magnetschienenbremse wird während der Bremsung kontinuierlich überwacht und der Strom- und/oder Spannungsverlauf aufgezeichnet. Hierbei ermittelt eine Auswertungseinrichtung anhand des aufgezeichneten Strom- und/oder Spannungsverlaufs das Aufsetzen der Magnetbremse auf die Schiene durch Detektion zweier Nulldurchgänge der ersten Ableitung des Strom- und/oder Spannungsverlaufs.

Auch aus der WO 2009/024168 A1 ist es bekannt, den einer elektromagnetischen Bremse zur Verfügung gestellten elektrischen Strom zu überwachen, um den Status der Magnetschienenbremse zu detektieren.

Zudem ist aus der DE 10 2008 029 312 B3 ein Verfahren zur Wirküberwachung von Schienenbremsen bekannt, bei dem eine Wicklung eines Bremsmagneten von einem elektrischen Strom durchflossen wird. Dabei wird der elektrische Strom gemessen und der zeitliche Verlauf des gemessenen Stromes mit einem gespeicherten zeitlichen Verlauf eines Referenzstromes verglichen.

Diese Ansätze erfordern nicht nur zusätzliche Sensorik, sondern der Verlauf derartiger Stromkurven kann zudem von vielen Parametern abhängig sein, wie beispielsweise dem maximal durch den Elektromagneten fließenden Strom, dem Spulenwiderstand es Elektromagneten, der gewählten Absenkgeschwindigkeit des Schleifschuhs, den Eigenschaften des Magnetkreises und so weiter. Damit geht jedoch eine gewisse Fehleranfälligkeit der zu treffenden Aussage über die Funktion der Magnetschienenbremse und damit der Wirküberwachung einher.

Vor diesem Hintergrund ist es Aufgabe der vorliegenden Erfindung, gattungsgemäße Verfahren und Vorrichtungen zur Wirküberwachung einer Magnetschienenbremse anzugeben, welche eine sichere Wirküberwachung und gleichzeitig einen einfachen Aufbau, insbesondere ohne auf zusätzliche Elektronik oder Sensorik angewiesen zu sein, ermöglichen.

Gemäß einem ersten Aspekt der Erfindung wird ein Verfahren zur Wirküberwachung einer Magnetschienenbremse offenbart, wobei das Verfahren umfasst: Erfassen eines Druckverlaufs repräsentativ für einen Druck einer pneumatischen Betätigungseinrichtung der Magnetschienenbremse; und Prüfen, zumindest teilweise basierend auf dem erfassten Druckverlauf, ob eine Funktionsfähigkeit der Magnetschienenbremse gegeben ist und/oder eine Verschleißgrenze der Magnetschienenbremse erreicht ist.

Das Verfahren kann dabei insbesondere durch eine Vorrichtung gemäß dem zweiten oder dritten Aspekt ausgeführt werden.

Die Erfindung wendet sich von den bisher verfolgten Ansätzen ab, welche die Funktionsfähigkeit einer Magnetschienenbremse dadurch prüfen, dass zusätzliche Sensoren, wie beispielsweise ein Abstandssensor oder ein Endlagenschalter vorgesehen sein müssen und ausgewertet werden müssen. Es hat sich nämlich gezeigt, dass eine Wirküberwachung auch dadurch realisiert werden kann, dass ein Druckverlauf repräsentativ für einen Druck der pneumatischen Betätigungseinrichtung der Magnetschienenbremse erfasst wird und jedenfalls teilweise auf Basis des erfassten Drucks die Funktionsfähigkeit und/oder der Verschleißzustand der Magnetschienenbremse geprüft wird. Besonders bevorzugt kann ein Prüfen, ob eine Funktionsfähigkeit und/oder nicht mehr zulässiger Verschleißzustand der Magnetschienenbremse gegeben ist, ausschließlich auf dem erfassten Druckverlauf basieren. Denn dem Druckverlauf können ausreichend Informationen entnommen werden, um sichere Rückschlüsse auf die Zustände der Magnetschienenbremse ziehen zu können.

Hierdurch kann auf konventionelle und damit bewährte Komponenten für die Ansteuerung, das heißt Bestromung der Magnetschienenbremse zurückgegriffen werden, da keine zusätzliche Elektronik (wie etwa eine elektronische Aufsetzerkennung mit separater Auswertelektronik) notwendig ist. Der Druckverlauf kann dabei beispielsweise über die im Bremssystem eines Schienenfahrzeugs implementierten Drucksensoren erfolgen. Diese sind in der Regel ohnehin vorhanden.

Darüber hinausgehend hat sich gezeigt, dass durch das vorteilhafte Prüfen, welches zumindest teilweise auf dem erfassten Druckverlauf basiert, im Gegensatz zu bekannten Verfahren sogar zusätzliche Rückschlüsse, beispielsweise über die Kraftwirkung der Magnetschienenbremse oder über beide Endlagen der Magnetschienenbremse, erhalten werden können. Es hat sich dabei insbesondere gezeigt, dass die Lageerkennung insbesondere weitestgehend unabhängig vom Magnetkreis der Magnetschienenbremse erfolgen kann.

Im Ergebnis kann somit ein Verfahren zur Wirküberwachung einer Magnetschienenbremse angegeben werden, welches eine sichere Wirküberwachung und gleichzeitig einen einfachen Aufbau, insbesondere ohne zusätzliche Elektronik oder Sensorik, ermöglicht.

Der Druckverlauf kann insbesondere derart erfasst werden, dass zeitlich aufgelöste Druckinformationen oder Druckdaten (beispielsweise durch mehrmaliges oder kontinuierliches Erfassen des entsprechenden Drucks) erhalten werden, beispielsweise in Form eines oder mehrere Datensätze. Beispielsweise wird der Druckverlauf derart erfasst, dass digitale Daten erhalten werden, welche den erfassten Druckverlauf repräsentieren. Der Druckverlauf muss nicht unbedingt derart erfasst werden, dass hieraus ein relativer oder absoluter Druck abgeleitet werden kann. Vielmehr kann der Druckverlauf beispielsweise auch nur qualitativ erfasst werden, sodass lediglich eine qualitative Aussage über den zeitlichen Verlauf des Drucks gemacht werden kann. Bevorzugt wird der Druckverlauf jedoch derart erfasst, dass auch eine quantitative Aussage über den Druck (das heißt seine relative oder absolute Höhe) gemacht werden kann.

Der Druckverlauf soll dabei repräsentativ für einen Druck einer pneumatischen Betätigungseinrichtung sein. Hierzu kann beispielsweise der Druck in Betätigungszylindern der pneumatischen Betätigungseinrichtung erfasst werden. Ebenfalls kann jedoch der Druckverlauf beispielsweise in einer Zuleitung oder Ableitung der pneumatischen Betätigungsvorrichtung oder einer anderen mit der pneumatischen Betätigungseinrichtung in Verbindung stehenden Komponente erfasst werden.

Unter einem Prüfen, ob eine Funktionsfähigkeit der Magnetschienenbremse gegeben ist, wird insbesondere verstanden, dass eine oder mehrere Funktionen der Magnetschienenbremse geprüft werden. Beispielsweise können eine ohne mehrere elektrische Funktionen überprüft werden. Beispielsweise können eine oder mehrere mechanische Funktionen überprüft werden.

Unter einem Prüfen des Erreichens einer Verschleißgrenze bzw. des Verschleißzustandes der Magnetschienenbremse wird insbesondere die Prüfung der Materialstärke der Bremsbeläge verstanden. Idealerweise werden bei der Prüfung des Verschleißzustandes die Abnutzung der Räder und/oder der Beladungszustand des Schienenfahrzeuges mit einbezogen.

Unter einer Magnetschienenbremse wird insbesondere eine zusätzliche Bremseinrichtung eines Schienenfahrzeugs, die unmittelbar auf die Schienen wirkt, verstanden. Die Magnetschienenbremse kann einen oder mehrere Schleifschuhe umfassen. Die Magnetschienenbremse umfasst bevorzugt einen Elektromagneten. Die Magnetschienenbremse ist insbesondere in Hochlagenbauform ausgebildet. Die Magnetschienenbremse ist insbesondere in eine untere Endlage und eine Hochlage (obere Endlage) bringbar. Hierunter wird verstanden, dass dabei ein oder mehrere Schleifschuhe der Magnetschienenbremse in die untere Endlage oder Hochlage gebracht werden.

Die pneumatische Betätigungseinrichtung umfasst beispielsweise einen oder mehrere pneumatische Betätigungszylinder. Die pneumatische Betätigungseinrichtung ist dabei insbesondere dazu eingerichtet, die Magnetschienenbremse aus der Hochlage oder oberen Endlage zumindest teilweise in die Tieflage oder untere Endlage zu bringen und umgekehrt.

Gemäß einer bevorzugten Ausgestaltung des Verfahrens gemäß dem ersten Aspekt umfasst das Verfahren weiterhin ein Auslösen eines Anhebens der Magnetschienenbremse mittels der pneumatischen Betätigungseinrichtung, wobei der Druckverlauf repräsentativ für einen Druck zumindest teilweise während des Anhebens oder des versuchten Anhebens der Magnetschienenbremse mittels der pneumatischen Betätigungseinrichtung ist.

Dabei ist zuvor insbesondere ein Auslösen eines Absenkens der Magnetschienenbremse mittels der pneumatischen Betätigungseinrichtung erfolgt. Unter einem Absenken wird dabei insbesondere verstanden, dass hierdurch der mindestens eine Schleifschuhe, wenn er sich in der Hochlage befindet, im funktionsfähigen Zustand durch die pneumatische Betätigungseinrichtung in die untere oder in Richtung der unteren Endlage abgesenkt wird.

Unter einem Anheben der Magnetschienenbremse wird dementsprechend insbesondere verstanden, dass hierdurch der mindestens eine Schleifschuh, wenn er sich nicht in der Hochlage befindet, im funktionsfähigen Zustand (und wenn der Schleifschuh beispielsweise nicht durch weitere Kräfte, etwa magnetische Kräfte, in seiner unteren Endlage gehalten wird) durch die pneumatische Betätigungseinrichtung in die obere oder in Richtung der Hochlage angehoben wird. Ist die Funktionsfähigkeit beeinträchtigt, kann das Anheben jedoch unterbunden sein, etwa weil zuvor kein Absenken erfolgen konnte oder weil ein bestromter Elektromagnet der Magnetschienenbremse den Schleifschuh in der unteren Endlage hält. Ob also tatsächlich ein mechanisches Anheben erfolgt, hängt vom Zustand der Magnetschienenbremse ab.

Es hat sich gezeigt, dass durch einen derart erfassten Druckverlauf zuverlässig auf die Funktionsfähigkeit der Magnetschienenbremse rückgeschlossen werden kann. Dabei hat sich gezeigt, dass ein Erfassen des Druckverlaufs während des Anhebens besonders vorteilhaft ist, da das Anheben im Vergleich zum Absenken langsamer oder verlangsamt ablaufen kann. Das Absenken oder Aktivieren der Magnetschienenbremse muss hingegen entsprechend schnell erfolgen können, sodass hier dieser Vorgang zugunsten einer verbesserten Erfassung des Druckverlaufs nicht verlangsamt werden kann, was eine Auswertung eines erfassten Druckverlaufs erschwert.

Grundsätzlich wäre aber ebenfalls denkbar, dass der Druckverlauf repräsentativ für einen Druck zumindest teilweise während des Absenkens oder des versuchten Absenkens der Magnetschienenbremse mittels der pneumatischen Betätigungseinrichtung ist.

Ebenfalls wäre denkbar, dass der Druckverlauf repräsentativ für einen Druck zumindest teilweise sowohl während des Absenkens oder des versuchten Absenkens als auch während des Anhebens oder des versuchten Anhebens der Magnetschienenbremse mittels der pneumatischen Betätigungseinrichtung ist.

Gemäß einer bevorzugten Ausgestaltung des erfindungsgemäßen Verfahrens erfolgt das Anheben oder das versuchte Anheben der Magnetschienenbremse mittels der pneumatischen Betätigungseinrichtung durch eine Entlüftung, insbesondere eine gedrosselte Entlüftung, der pneumatischen Betätigungseinrichtung.

Dadurch, dass die pneumatische Betätigungseinrichtung derart eingerichtet ist, dass eine Entlüftung der pneumatischen Betätigungseinrichtung das Anheben durchführt oder dieses versucht, kann der (versuchte) Anhebevorgang auf einfache Weise gedrosselt werden, indem beispielsweise eine Entlüftungsöffnung zur Drosselung ausgebildet wird (beispielsweise indem diese entsprechend klein ausgebildet wird).

Beispielsweise ist die pneumatische Betätigungseinrichtung derart eingerichtet, dass das Entlüften mehr als 1 Sekunde, bevorzugt mehr als 5 Sekunden dauert. Dadurch kann eine Auswertung des Druckverlaufs vereinfacht werden. Ist die pneumatische Betätigungseinrichtung dabei beispielsweise derart eingerichtet, dass das Entlüften weniger als 20 Sekunde, bevorzugt weniger als 15 Sekunden dauert, kann die benötigte Zeitdauer einer Prüfvorgangs gering gehalten werden.

Die Kraft für das Anheben wird dabei beispielsweise durch ein oder mehrere Federelemente bereitgestellt. Die Federelemente können beispielsweise ein Teil der der Betätigungszylinder der pneumatischen Betätigungseinrichtung sein.

Entsprechend kann das Absenken oder das versuchte Absenken der Magnetschienenbremse mittels der pneumatischen Betätigungseinrichtung durch eine Druckbeaufschlagung der pneumatischen Betätigungseinrichtung erfolgen. Dabei werden die entsprechenden Federelemente komprimiert, sodass diese anschließend den beschriebenen Anhebevorgang ausführen können.

Gemäß einer bevorzugten Ausgestaltung des erfindungsgemäßen Verfahrens umfasst das Verfahren weiterhin ein Bestromen eines Elektromagneten der Magnetschienenbremse; und ein anschließendes Abschalten der Bestromung des Elektromagneten der Magnetschienenbremse.

Obwohl der erfasste Druckverlauf insbesondere repräsentativ für einen Druck einer Komponente zur mechanischen Bewegung ist, hat es sich gezeigt, dass durch den erfassten Druckverlauf nicht nur eine Funktionsfähigkeit einer mechanischen Funktion, sondern auch eine Funktionsfähigkeit einer elektrischen Funktion überprüft werden kann. Denn durch ein erfolgreiches Anschalten und/oder Abschalten wird die Magnetschienenbremse derart beeinflusst, dass auch diese elektrische Funktionsfähigkeit basierend auf dem erfassten Druckverlauf geprüft werden kann.

Gemäß einer bevorzugten Ausgestaltung des erfindungsgemäßen Verfahrens erfolgt das Abschalten der Bestromung gemeinsam mit dem Auslösen des Anhebens der Magnetschienenbremse mittels der pneumatischen Betätigungseinrichtung oder nach dem Auslösen des Anhebens der Magnetschienenbremse mittels der pneumatischen Betätigungseinrichtung.

Unter einem gemeinsamen Abschalten der Bestromung und Auslösen des Anhebens wird verstanden, dass diese im Wesentlichen parallel oder zeitgleich erfolgen. Hierdurch kann vorteilhaft die benötigte Dauer für eine Prüfung gering gehalten werden.

Erfolgt das Abschalten der Bestromung hingegen nach dem Auslösen des Anhebens der Magnetschienenbremse mittels der pneumatischen Betätigungseinrichtung, kann eine zeitliche Trennung einzelner Einflussfaktoren auf den Druckverlauf erreicht werden, was eine Auswertung des Druckverlaufs vereinfachen kann.

Beispielsweise erfolgt das Abschalten der Bestromung nach einem im Wesentlichen vollständigen Entlüften der pneumatischen Betätigungsvorrichtung. Beispielsweise erfolgt das Abschalten der Bestromung erst, wenn ein im Wesentlichen konstanter Druck vorliegt. Beispielsweise erfolgt das Abschalten der Bestromung frühestens 5 Sekunden, bevorzugt frühestens 10 Sekunden nach dem Auslösen des Anhebens. So kann sichergestellt werden, dass ein im Wesentlichen vollständiges entlüften erfolgt ist.

Gemäß einer bevorzugten Ausgestaltung des erfindungsgemäßen Verfahrens umfasst das Verfahren weiterhin ein Feststellen, dass eine Funktionsfähigkeit der Magnetschienenbremse gegeben ist und/oder eine vordefinierte Verschleißgrenze der Magnetschienenbremse nicht erreicht wurde, wenn der erfasste Druckverlauf zumindest teilweise einem erwarteten Druckverlauf hinreichend entspricht, und/oder ein Feststellen, dass eine Funktionsfähigkeit der Magnetschienenbremse nicht gegeben ist und/oder eine vordefinierte Verschleißgrenze der Magnetschienenbremse erreicht wurde, wenn der erfasste Druckverlauf zumindest teilweise einem erwarteten Druckverlauf nicht hinreichend entspricht.

Beispielsweise entspricht der erfasste Druckverlauf zumindest teilweise dem erwarteten Druckverlauf, wenn diese ausreichend ähnlich sind. Um zu entscheiden, ob der erfasste Druckverlauf zumindest teilweise mit einem erwarteten Druckverlauf hinreichend entspricht, wird beispielsweise der erfasste Druckverlauf zumindest teilweise mit einem erwarteten Druckverlauf (beispielsweise einem Referenzdruckverlauf) verglichen. Beispielsweise wird eine Differenz zwischen zumindest einem Teil des erfassten Druckverlaufs und einem entsprechenden Teil eines erwarteten Druckverlaufs gebildet. Der erfasste und der erwartete Druckverlauf entsprechen sich beispielsweise dann hinreichend, wenn eine Differenz der Druckverläufe unterhalb eines Schwellwertes liegt. Ein erwarteter Druckverlauf ist dabei insbesondere ein Druckverlauf, der bei einer Funktionsfähigkeit der Magnetscheibenbremse erfasst würde.

Ebenfalls ist denkbar, dass der erfasste Druckverlauf zumindest teilweise einem erwarteten Druckverlauf hinreichend entspricht, wenn ein oder mehrere Merkmale des erfassten Druckverlaufs den jeweiligen Merkmalen eines erwarteten Druckverlaufs hinreichend entsprechen. Insofern kann der erfasste Druckverlauf zumindest teilweise dem erwarteten Druckverlauf hinreichend entsprechen, wenn der erfasste Druckverlauf ein oder mehrere vordefinierte Merkmale aufweist oder nicht aufweist. Derartige Merkmale können beispielsweise einen Wert, eine Ableitung, ein Integral und/oder einen Verlauf des Druckverlaufs an einem Punkt oder in einem Bereich umfassen. Es kann beispielsweise geprüft werden, ob das Merkmal einem vordefinierten Kriterium genügt oder nicht genügt, beispielsweise unterhalb oder oberhalb einer vordefinierten Schwelle liegt. Hieraus kann dann darauf geschlossen werden, dass eine Funktionsfähigkeit gegeben ist oder nicht.

Entsprechend kann entschieden werden, dass der erfasste Druckverlauf zumindest teilweise dem erwarteten Druckverlauf nicht hinreichend entspricht, sodass festgestellt werden kann, dass eine Funktionsfähigkeit der Magnetschienenbremse nicht gegeben ist.

Der erwartete Druckverlauf kann gemäß weiteren bevorzugten Ausführung des Verfahrens abhängig von dem Verschleißzustand der Bremsbeläge und/oder der Räder bzw. Radsätze des Schienenfahrzeuges und/oder abhängig vom Beladungszustand des Schienenfahrzeuges variiert werden. Weil sich aufgrund des Materialabtrages an den Rädern des Schienenfahrzeuges und den Bremsbelägen der Magnetschienenbremsen der zurückzulegende Weg der Magnetschienenbremse zwischen Hochlage und Tieflage verringert, ändert sich entsprechend der Druckverlauf. Des Weiteren kann aufgrund des Beladungszustands des Schienenfahrzeugs die durch die Magnetschienenbremse zurückzulegende Wegstrecke verändert werden. Idealerweise wird der erwartete Druckverlauf nach Erfassung des Zustandes von Bremsbelägen, Rädern und/oder des Beladungszustandes entsprechend an die veränderte erwartete Wegstrecke angepasst. Dies kann beispielsweise durch Kalibriermessung erfolgen, indem der Druckverlauf bei Absenken der Magnetschienenbremse aufgezeichnet wird.

In einer weiteren bevorzugten Ausführungsform kann der erwartete Druckverlauf an Umgebungsparameter angepasst werden. Z.B. können tiefere Temperaturen zu einer Versteifung von Elastomer-Bestandteilen der Druckzylinder führen, wodurch sich wiederum der charakteristische Druckverlauf verändern kann. Idealerweise können abhängig von Umgebungsparametern, z.B. der Temperatur, unterschiedliche erwartete Druckverläufe eingestellt werden.

In einer weiteren vorteilhaften Ausgestaltung der Erfindung kann eine Verschleißwarnung erfolgen, wenn der Druckverlauf einem bei erreichter Verschleißgrenze erwartetem Druckverlauf entspricht.

Gemäß einer bevorzugten Ausgestaltung des erfindungsgemäßen Verfahrens wird der erfasste Druckverlauf zur Prüfung der Funktionsfähigkeit zumindest dahingehend überprüft, ob die Magnetschienenbremse eine Hochlage verlassen hat.

Es hat sich gezeigt, dass ein erfasster Druckverlauf indikativ dafür sein kann, dass die Magnetschienenbremse eine Hochlage verlassen hat oder nicht verlassen hat. Verlässt die Magnetschienenbremse die Hochlage nicht, wird sich das Volumen der pneumatischen Betätigungsvorrichtung nicht ändern und bleibt klein und konstant. Entsprechend ändert sich der Druckverlauf bei Beaufschlagung der pneumatischen Betätigungsvorrichtung mit Druck und/oder bei Entlüftung der pneumatischen Betätigungsvorrichtung. Somit kann anhand des erfassten Druckverlaufs geprüft werden, ob in Bezug auf ein Verlassen der Hochlage eine Funktionsfähigkeit gegeben ist.

Gemäß einer bevorzugten Ausgestaltung des erfindungsgemäßen Verfahrens wird der erfasste Druckverlauf zur Prüfung der Funktionsfähigkeit zumindest dahingehend überprüft, ob die Magnetschienenbremse eine Schienenoberfläche erreicht hat.

Es hat sich gezeigt, dass ein erfasster Druckverlauf indikativ dafür sein kann, dass die Magnetschienenbremse eine Schienenoberfläche erreicht hat oder nicht erreicht hat.

Erfolgt beispielsweise das Abschalten der Bestromung gemeinsam mit dem Auslösen des Anhebens der Magnetschienenbremse mittels der pneumatischen Betätigungseinrichtung, wird durch das Erreichen der Schienenoberfläche beispielsweise der Anhebevorgang mittels der pneumatischen Betätigungsvorrichtung verzögert, da dieser durch eine Restmagnetisierung kurzzeitig an der Schienenoberfläche gehalten wird. Hierdurch weist der erfasste Druckverlauf insbesondere ein Merkmal in Form einer charakteristischen Überschwingung auf, welches dem erfassten Druckverlauf zu entnehmen ist. Erreicht die Magnetschienenbremse die Schienenoberfläche nicht, fehlt dieses Merkmal. Gleichzeitig erfolgt im Vergleich zum funktionsfähigen Szenario beispielsweise eine geringere Volumenverkleinerung der pneumatischen Betätigungsvorrichtung während des Anhebens und/oder der Schleifschuh erreicht ausgehend von der vermeintlichen unteren Endlage seine Hochlage früher. Dadurch wird insbesondere ein Teil des Druckverlaufs zeitlich früher erfasst als erwartet.

Erfolgt beispielsweise das Abschalten der Bestromung hingegen nach dem Auslösen des Anhebens der Magnetschienenbremse mittels der pneumatischen Betätigungseinrichtung, wird erst durch das Abschalten der Bestromung der Schleifschuh von der Schiene gelöst, sodass erst hierdurch das Volumen der pneumatischen Betätigungsvorrichtung verringert wird und gleichzeitig eine Druckerhöhung erfolgt. Hierdurch weist der erfasste Druckverlauf auch in diesem Fall insbesondere ein Merkmal in Form einer charakteristischen Druckerhöhung auf, welches dem erfassten Druckverlauf zu entnehmen ist. Hat die Magnetschienenbremse die Schienenoberfläche nicht erreicht, fehlt dieses Merkmal.

Gemäß einer bevorzugten Ausgestaltung des erfindungsgemäßen Verfahrens wird der erfasste Druckverlauf zur Prüfung der Funktionsfähigkeit zumindest dahingehend überprüft, ob die Magnetschienenbremse eine Hochlage erreicht hat.

Es hat sich gezeigt, dass ein erfasster Druckverlauf indikativ dafür sein kann, dass die Magnetschienenbremse eine Hochlage erreicht hat oder nicht erreicht hat. Erreicht die Magnetschienenbremse eine Hochlage nicht, erfolgt im Vergleich zum funktionsfähigen Szenario beispielsweise eine geringere Volumenverkleinerung der pneumatischen Betätigungsvorrichtung während des Anhebens und/oder die Magnetschienenbremse erreicht die vermeintliche Hochlage früher. Dadurch wird insbesondere ein Teil des Druckverlaufs zeitlich früher erfasst als erwartet. Somit kann auch in diesem Fall anhand des erfassten Druckverlaufs geprüft werden, ob in Bezug auf ein Verlassen der Hochlage eine Funktionsfähigkeit gegeben ist.

Gemäß einer bevorzugten Ausgestaltung des erfindungsgemäßen Verfahrens wird der erfasste Druckverlauf zur Prüfung der Funktionsfähigkeit zumindest dahingehend überprüft, ob ein Elektromagnet der Magnetschienenbremse bestromt wurde.

Es hat sich gezeigt, dass ein erfasster Druckverlauf indikativ dafür sein kann, dass ein Elektromagnet der Magnetschienenbremse bestromt wurde oder nicht bestromt wurde.

Erfolgt beispielsweise das Abschalten der Bestromung gemeinsam mit dem Auslösen des Anhebens der Magnetschienenbremse mittels der pneumatischen Betätigungseinrichtung, wird durch das Bestromen der Schienenoberfläche beispielsweise der Anhebevorgang mittels der pneumatischen Betätigungsvorrichtung verzögert, da ein Schleifschuh der Magnetschienenbremse durch eine Restmagnetisierung kurzzeitig an der Schienenoberfläche gehalten wird. Hierdurch weist der erfasste Druckverlauf insbesondere ein Merkmal in Form einer charakteristischen Überschwingung auf, welches dem erfassten Druckverlauf zu entnehmen ist. Wird der Elektromagnet nicht bestromt, fehlt dieses Merkmal.

Erfolgt beispielsweise das Abschalten der Bestromung hingegen nach dem Auslösen des Anhebens der Magnetschienenbremse mittels der pneumatischen Betätigungseinrichtung, wird erst durch das Abschalten der Bestromung der Schleifschuh von der Schiene gelöst, sodass erst hierdurch das Volumen der pneumatischen Betätigungsvorrichtung verringert wird und gleichzeitig eine Druckerhöhung erfolgt. Hierdurch weist der erfasste Druckverlauf auch in diesem Fall insbesondere ein Merkmal in Form einer charakteristischen Druckerhöhung auf, welches dem erfassten Druckverlauf zu entnehmen ist. Wurde der Elektromagnet nicht bestromt, fehlt dieses Merkmal.

Die zuvor dargestellten Unterschiede zwischen dem erwarteten und dem erfassten Druckverlauf sind nur beispielhaft zu verstehen. Insbesondere kann ein Feststellen, ob eine bestimmte Funktionsfähigkeit gegeben ist oder nicht, auch auf weiteren Merkmalen oder zusätzlich auf weiteren Merkmalen des erfassten Druckverlaufs oder auch auf Kombinationen der dargestellten Merkmale basieren.

Gemäß einem zweiten Aspekt wird zudem eine Vorrichtung offenbart, welche dazu eingerichtet ist oder entsprechende Mittel aufweist, ein Verfahren gemäß dem ersten Aspekt durchzuführen und/oder zu steuern.

Gemäß einem dritten Aspekt wird zudem eine Vorrichtung beschrieben, insbesondere zur Durchführung eines Verfahrens gemäß dem ersten Aspekt, wobei die Vorrichtung umfasst: eine Magnetschienenbremse, umfassend eine pneumatische Betätigungseinrichtung, eine Drucksensoreinheit, und eine Auswerteeinheit, wobei die Drucksensoreinheit dazu eingerichtet ist, einen Druckverlauf repräsentativ für den Druck der pneumatischen Betätigungseinrichtung der Magnetschienenbremse zu erfassen, und wobei die Auswerteeinheit dazu eingerichtet ist, zu prüfen, zumindest teilweise basierend auf dem erfassten Druckverlauf, ob eine Funktionsfähigkeit der Magnetschienenbremse gegeben ist und/oder ob eine Verschleißgrenze der Magnetschienenbremse erreicht ist.

Eine Drucksensoreinheit kann dabei einen oder mehrere Drucksensoren umfassen. Ein Drucksensor kann beispielsweise ein Absolutdrucksensor, ein Differenzdrucksensor oder ein Relativdrucksensor sein.

Eine Auswerteeinheit kann beispielsweise eine Datenverarbeitungsanlage sein oder umfassen, die softwaremäßig und/oder hardwaremäßig eingerichtet ist, um die entsprechenden Schritte (insbesondere Schritte des Verfahrens gemäß dem ersten Aspekt, insbesondere der Schritt der Prüfens, ob eine Funktionsfähigkeit der Magnetschienenbremse gegeben ist) ausführen zu können. Eine Auswerteeinheit kann beispielsweise zumindest einen Prozessor und zumindest einen Speicher mit Computerprogrammcode umfassen, wobei der zumindest eine Speicher und der Computerprogrammcode dazu eingerichtet sind, mit dem zumindest einen Prozessor die jeweiligen Schritte (insbesondere Schritte des Verfahrens gemäß dem ersten Aspekt) auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Gemäß einer bevorzugten Ausgestaltung der erfindungsgemäßen Vorrichtung umfasst die pneumatische Betätigungseinrichtung weiterhin zumindest eine pneumatische Zuführung, wobei die Drucksensoreinheit insbesondere im Bereich der pneumatischen Zuführung angeordnet ist. Durch eine Anordnung der Drucksensoreinheit im Bereich der pneumatischen Zuführung kann diese einfach implementiert werden. Die pneumatische Zuführung kann zudem ein Magnetventil zur Ansteuerung von pneumatischen Betätigungsmitteln umfassen.

Gemäß einer bevorzugten Ausgestaltung der erfindungsgemäßen Vorrichtung umfasst die Magnetschienenbremse weiterhin einen Elektromagneten und die Vorrichtung umfasst weiterhin zumindest eine elektrische Zuführung zur Bestromung des Elektromagneten der Magnetschienenbremse. Die elektrische Zuführung kann zudem beispielsweise eine Auslöseeinrichtung für die Magnetschienenbremsanforderung umfassen.

Gemäß einem vierten Aspekt wird zudem ein Schienenfahrzeug oder ein Teil hiervon offenbart, welches eine Vorrichtung gemäß dem zweiten oder dritten Aspekt aufweist. Ein Schienenfahrzeug ist beispielsweise eine Vollbahn, Hauptbahn oder Nebenbahn. Beispielsweise ist das Schienenfahrzeug ein Personenzug, ein Güterzug oder ein gemischter Zug. Ein Teil eines Schienenfahrzeugs kann insbesondere ein Wagon eines Schienenfahrzeugs sein.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen des Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Die Zeichnung zeigt in:
- Fig. 1-3: schematische Schaltbilder von Ausführungsbeispielen erfindungsgemäßer Vorrichtungen;
- Fig. 4: eine schematische Darstellung eines beispielhaften erfassten Druckverlaufs, wenn alle Funktionsfähigkeiten gegeben sind;
- Fig. 5a-c: schematische Darstellungen beispielhafter erfasster Druckverläufe, wenn unterschiedliche Funktionsfähigkeiten nicht gegeben sind;
- Fig. 6: eine schematische Darstellung eines beispielhaften erfassten Druckverlaufs, wenn alle Funktionsfähigkeiten gegeben sind; und
- Fig. 7a-c: schematische Darstellungen beispielhafter erfasster Druckverläufe, wenn unterschiedliche Funktionsfähigkeiten nicht gegeben sind.

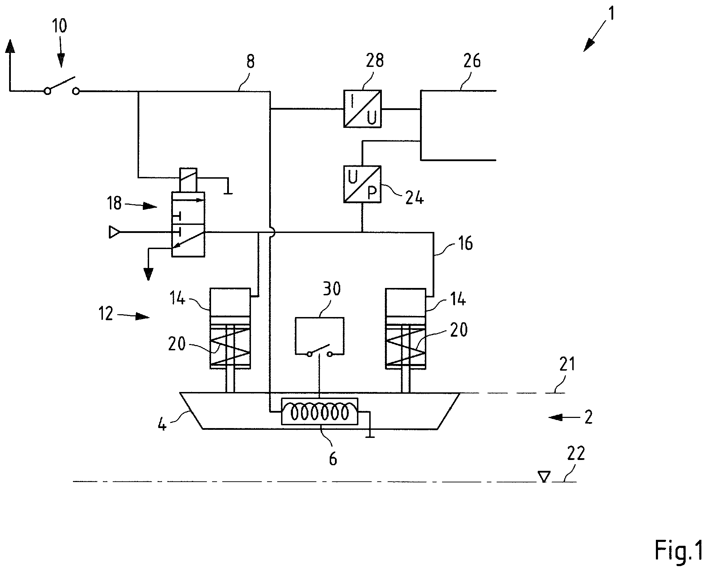

Die Fig. 1-3 zeigen zunächst schematische Schaltbilder von Ausführungsbeispielen von Vorrichtungen, welche erfindungsgemäße Vorrichtungen sein können.

Die in Fig. 1 dargestellte Vorrichtung 1 weist eine Magnetschienenbremse 2 mit einem Schleifschuh 4 und einem integriertem Elektromagneten 6, welcher jedenfalls eine Spule umfasst, auf. Der Elektromagnet wird durch eine elektrische Zuführung 8 bestromt. Die elektrische Zuführung umfasst zudem eine Auslöseeinrichtung 10 für eine Magnetschienenbremsanforderung. Der Schleifschuh 4 der Magnetschienenbremse 2 ist in angehobenen Zustand in der Hochlage oder oberen Endlage 21 dargestellt.

Die Lage des Schleifschuhs 4 der Magnetschienenbremse 2 lässt sich im funktionsfähigen Zustand durch eine pneumatische Betätigungseinrichtung 12 der Magnetschienenbremse 2 verändern. Die pneumatische Betätigungseinrichtung 12 umfasst hier zwei pneumatische Betätigungsmittel in Form von zwei pneumatischen Betätigungszylindern oder Absenkzylindern 14, welche durch eine pneumatische Zuführung 16 mit Druck versorgt werden. Die pneumatische Zuführung 16 weist ein Magnetventil 18 zur Ansteuerung der pneumatischen Betätigungszylindern 14 auf. Die pneumatischen Betätigungszylinder 14 umfassen zudem jeweils ein Federelement 20, welche den Schleifschuh 4 der Magnetschienenbremse 2 in der Hochlage 21 halten und in Richtung der Hochlage vorspannen.

Durch Druckbeaufschlagung der pneumatischen Betätigungszylinder 14 übersteigt der Druck die Federkraft der Federelemente 20 und der Schleifschuh 4 der Magnetschienenbremse 2 kann im funktionsfähigen Zustand in die untere Endlage 22 auf die Schienenoberfläche gebracht werden.

Ein Druckverlauf in der pneumatischen Betätigungseinrichtung 12, hier der pneumatischen Zuführung 16, kann durch eine Drucksensoreinheit 24 erfasst werden. Der erfasste Druckverlauf kann beispielsweise durch Auswerteeinheit 26 ausgewertet werden, sodass ein Prüfen, ob eine Funktionsfähigkeit der Magnetschienenbremse 2 gegeben ist, erfolgen kann.

Die Vorrichtung 1 umfasst weiterhin einen Stromsensor 28 und einen Endlagenschalter 30, welche ebenfalls dazu dienen können, elektrische bzw. mechanische Funktionen der Magnetschienenbremse 2 zu prüfen. Allerdings hat sich gezeigt, dass ein Prüfen der Funktionsfähigkeit der Magnetschienenbremse 2 bereits auf Basis des Druckverlaufs erfolgen kann. Dadurch ist es möglich, sowohl auf den Stromsensor 28 als auch auf den Endlagenschalter 30 zu verzichten.

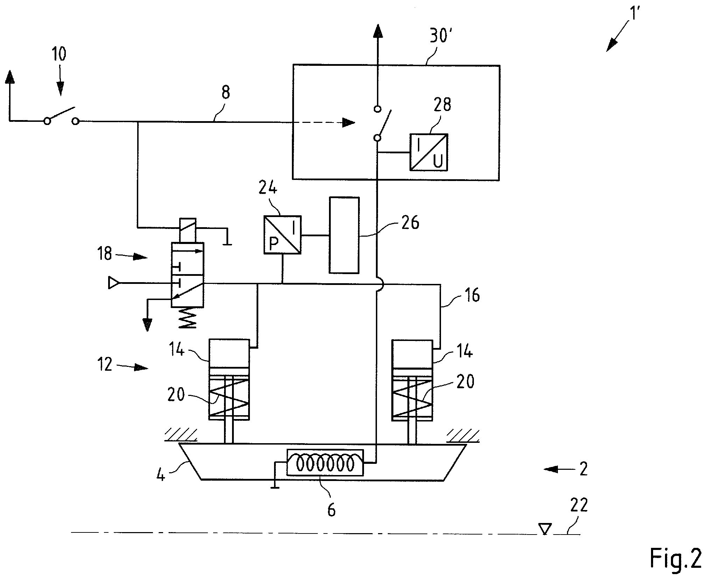

Fig. 2 zeigt eine Vorrichtung 1', welche der Vorrichtung 1 ähnlich ist. Insofern soll im Folgenden lediglich auf die Unterschiede eingegangen werden. Im Unterschied zur Vorrichtung 1 umfasst die Vorrichtung 1' keinen Endlagenschalter 8, sondern eine elektronische Überwachungseinheit 8' für den Magnetstrom mit Aufsatzerkennung. Auch hier hat sich gezeigt, dass ein Prüfen der Funktionsfähigkeit der Magnetschienenbremse 2 bereits auf Basis des mit der Drucksensoreinheit 24 erfassten Druckverlaufs durch die Auswerteeinheit 26 erfolgen kann. Dadurch wäre es auch in diesem Fall möglich, auf die Überwachungseinheit 8' und/oder den Strommesser 28 zu verzichten.

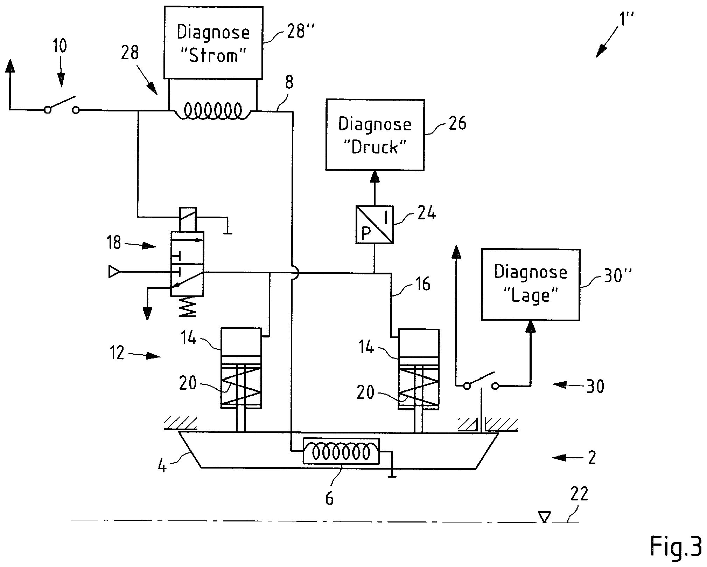

Fig. 3 zeigt eine Vorrichtung 1", welche der Vorrichtung 1 ähnlich ist, sodass auch hier lediglich auf die Unterschiede eingegangen werden soll. Im Unterschied zur Vorrichtung 1 weist die Vorrichtung 1" jeweils separate Auswerteinheiten 28", 30" für den Stromsensor 28 und den Endlagenschalter 30 auf. Auch hier hat sich jedoch gezeigt, dass ein Prüfen der Funktionsfähigkeit der Magnetschienenbremse 2 bereits auf Basis des mit der Drucksensoreinheit 24 erfassten Druckverlaufs durch die Auswerteeinheit 26 erfolgen kann. Dadurch wäre es auch in diesem Fall möglich, auf den Stromsensor 28 und/oder den Endlagenschalter 30 mit entsprechenden Auswerteinheiten 28", 30" zu verzichten.

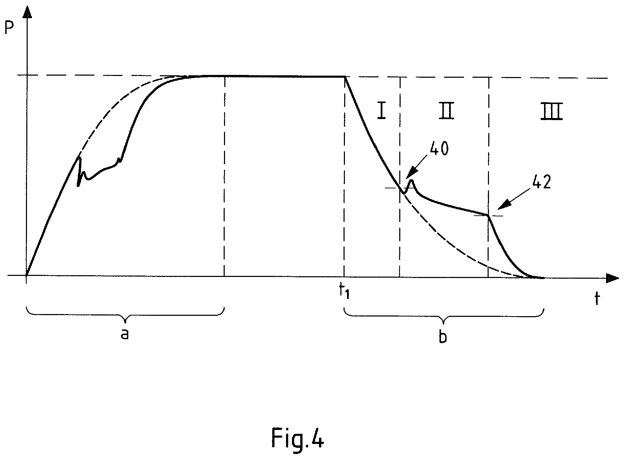

Fig. 4 zeigt eine schematische Darstellung eines beispielhaften erfassten Druckverlaufs, wenn alle Funktionsfähigkeiten gegeben sind. Dabei ist der durch die Drucksensoreinheit 24 erfasste Druck P über der Zeit t aufgetragen. Im mit a bezeichneten Zeitabschnitt steigt der Druck zunächst an, sodass der Schleifschuh 4 ausgehend von seiner Hochlage 21 mittels der pneumatischen Betätigungseinrichtung 12 in die untere Endlage gebracht wird. Zum Zeitpunkt t₁ erfolgt ein Auslösen eines Anhebens eines Schleifschuhs 4 der Magnetschienenbremse 2 mittels der pneumatischen Betätigungseinrichtung 12 zusammen mit einem Abschalten der zuvor erfolgten Bestromung des Elektromagneten 6 der Magnetschienenbremse 2. Im mit b bezeichneten Zeitabschnitt fällt der durch die Drucksensoreinheit 24 erfasste Druck daraufhin ab.

Dabei gliedert sich der Kurvenverlauf während des Abhebens im Wesentlichen in drei Abschnitte. In Abschnitt I werden zunächst die pneumatischen Betätigungszylinder 14 bei größtmöglichem Volumen entlüftet. Irgendwann übersteigt die Federkraft der Federelemente 20 die pneumatische Kraft und das Zylindervolumen der pneumatischen Betätigungszylinder 14 verringert sich. Im Abschnitt II ist der Gradient dp/dt im Wesentlichen konstant. Im Abschnitt II hat der Schleifschuh 4 die Hochlage erreicht und das nun kleinere Zylindervolumen der pneumatischen Betätigungszylinder 14 ist im Wesentlichen konstant, während der Druck weiter abfällt.

Aufgrund der verbleibenden Restmagnetkraft des Elektromagneten 6 wird der Anhebevorgang zunächst verzögert und ein Überschwingen 40 des Schleifschuhs 4 im Druckverlauf zu beobachten sein. Das Merkmal des Überschwingens kann daher zum Überprüfen, ob der Elektromagnet 6 bestromt wurde, verwendet werden. Da der Übergang von Bereich II zu Bereich III entsteht, wenn der Schleifschuh 4 die Hochlage 21 erreicht hat, kann durch die (zeitliche) Lage des Übergangs 42 auf das Erreichen der Hochlage 21 geschlossen werden. Das Merkmal der Lage des Übergangs 42 kann daher zum Überprüfen, ob die Hochlage 21 erreicht wurde, verwendet werden. Beispielsweise wird der Punkt des Übergangs 42 durch den Schnittpunkt der Regressionsgraden des Druckverlaufs im zweiten und dritten Bereich erhalten.

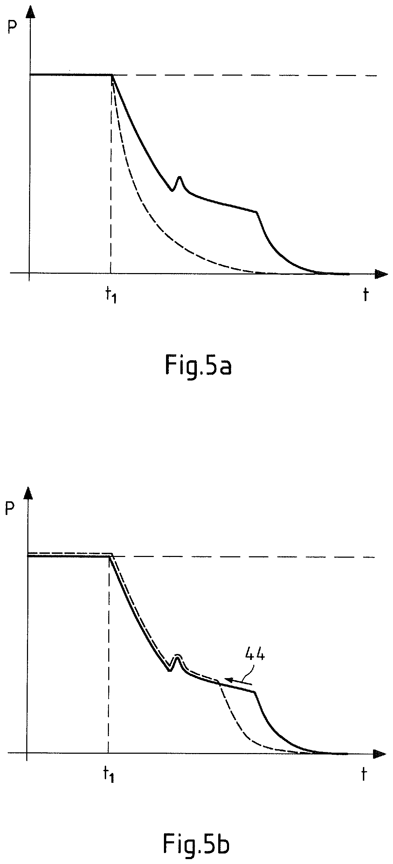

Die Fig. 5a-c zeigen schematische Darstellungen beispielhafter erfasster Druckverläufe (gestrichelt) im Vergleich zu dem erwarteten Druckverlauf (durchgezogen) aus Fig. 4, wenn unterschiedliche Funktionsfähigkeiten nicht gegeben sind.

Bei dem in Fig. 5a gestrichelt dargestellten erfassten Druckverlauf wurde die Hochlage 21 von dem Schleifschuh 4 nicht verlassen, beispielsweise weil die Magnetbremse blockiert. Dadurch bilden sich insbesondere die in Fig. 4 gezeigten charakteristischen Übergänge 40, 42 nicht aus. Unter anderem weist der Druckverlauf kein Überschwingen 40 und keinen Übergang 42 auf. Somit kann der erfasste Druckverlauf zur Prüfung der Funktionsfähigkeit zumindest dahingehend überprüft werden, ob die Magnetschienenbremse 2 die Hochlage 21 verlassen hat.

Bei dem in Fig. 5b gestrichelt dargestellten Druckverlauf wurde die Hochlage 21 nicht wieder erreicht. Dadurch wird der Anhebevorgang früher abgeschlossen und der Übergang 42 erfolgt zeitlich früher. Die zeitliche Verschiebung ist durch den Pfeil 44 dargestellt. Dadurch kann der erfasste Druckverlauf zur Prüfung der Funktionsfähigkeit zumindest dahingehend überprüft werden, ob die Magnetschienenbremse 2 die Hochlage 21 wieder erreicht hat.

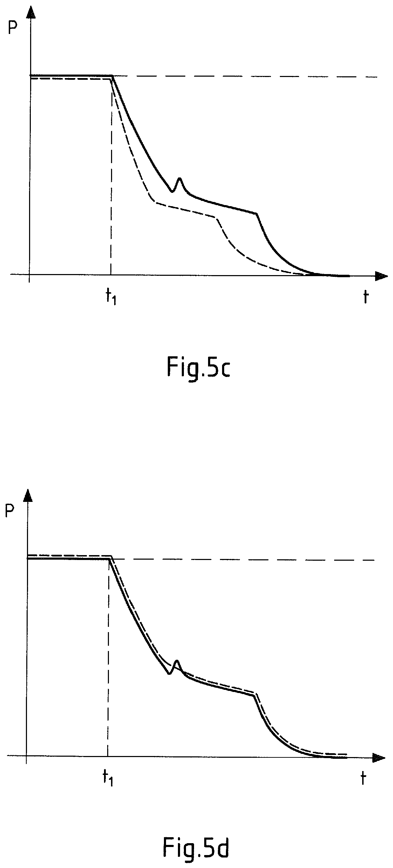

Bei dem in Fig. 5c gestrichelt dargestellten Druckverlauf wurde die Schienenoberfläche oder untere Endlage 22 nicht erreicht. Dadurch wird der Anhebevorgang aufgrund eines geringeren Zylindervolumens schneller angeschlossen sein. Zudem bleibt das Überschwingen 40 aus. Dadurch kann der erfasste Druckverlauf zur Prüfung der Funktionsfähigkeit zumindest dahingehend überprüft werden, ob die Magnetschienenbremse 2 eine Schienenoberfläche 21 erreicht hat.

Bei dem in Fig. 5d gestrichelt dargestellten Druckverlauf wurde die Spule des Elektromagneten 6 nicht bestromt. Durch die fehlende zusätzliche Kraft kann sich ein Überschwingen 40 nicht einstellen. Dadurch kann der erfasste Druckverlauf zur Prüfung der Funktionsfähigkeit zumindest dahingehend überprüft werden, ob ein Elektromagnet 6 der Magnetschienenbremse 2 bestromt wurde.

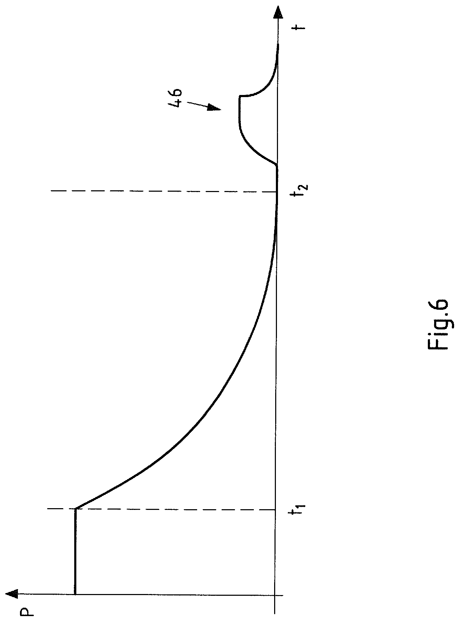

Fig. 6 zeigt eine schematische Darstellung eines beispielhaften erfassten Druckverlaufs, wenn alle Funktionsfähigkeiten gegeben sind. Der Druckverlauf weicht von dem in Fig. 4 gezeigten Druckverlauf ab, da nun das Abschalten der Bestromung erst zum Zeitpunkt tz nach dem Auslösen des Anhebens der Magnetschienenbremse 2 mittels der pneumatischen Betätigungseinrichtung 12 zum Zeitpunkt t₁ erfolgt. Zunächst wird der Schleifschuh 4 an der Schiene in der unteren Endlage 22 festgehalten, da sich dieser bei Funktionsfähigkeit der Magnetschienenbremse 4 aufgrund der Magnetkraft nicht von der Schiene lösen kann. Es erfolgt daher beim Auslösen des Anhebens durch ein Entlüften der pneumatischen Betätigungszylinder 14 eine Druckverringerung ohne jedoch eine Volumenverringerung der pneumatischen Betätigungszylinder 14 nach sich zu ziehen. Erst durch das Abschalten der Bestromung wird der Schleifschuh 4 von der Schiene gelöst und der Schleifschuh 4 durch die Federkraft der Federelemente 20 in die Hochlage 21 gebracht, sodass erst hierdurch das Volumen der pneumatischen Betätigungszylinder 14 der pneumatischen Betätigungsvorrichtung verringert wird und dadurch eine erfassbare Druckerhöhung 46 erfolgt.

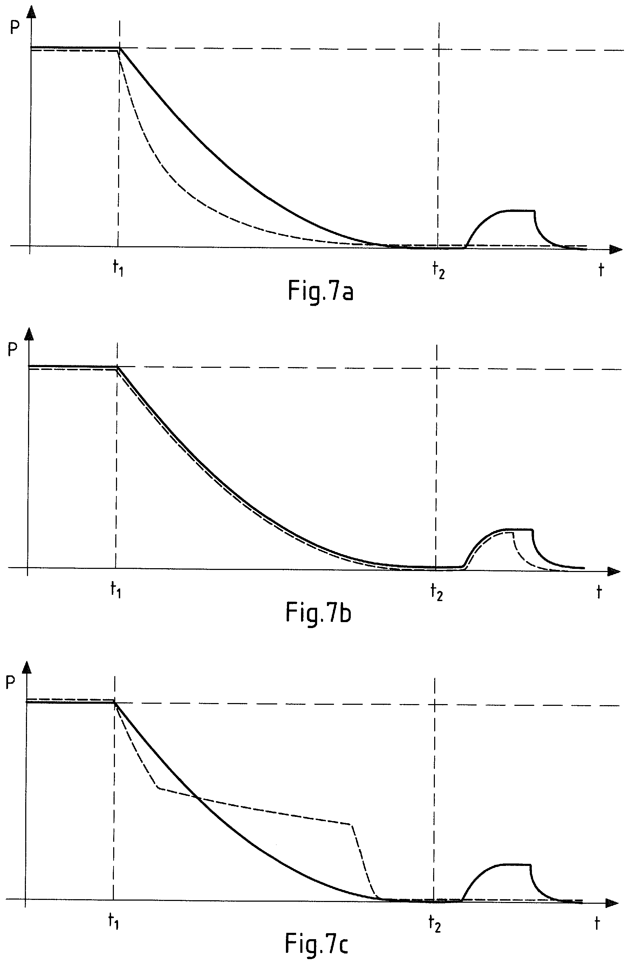

Die Fig. 7a-c zeigen schematische Darstellungen beispielhafter erfasster Druckverläufe (gestrichelt) im Vergleich zu dem erwarteten Druckverlauf (durchgezogen) aus Fig. 6, wenn unterschiedliche Funktionsfähigkeiten nicht gegeben sind.

Bei dem in Fig. 7a gestrichelt dargestellten erfassten Druckverlauf wurde die Hochlage 21 von dem Schleifschuh 4 nicht verlassen, beispielsweise weil die Magnetbremse blockiert. Dadurch kann sich das Volumen beim Entlüften nicht verkleinern, was einen schnelleren Druckabfall zur Folge hat. Zudem bildet sich die charakteristische Druckerhöhung 46 nicht aus. Somit kann der erfasste Druckverlauf zur Prüfung der Funktionsfähigkeit zumindest dahingehend überprüft werden, ob die Magnetschienenbremse 2 die Hochlage 21 verlassen hat.

Bei dem in Fig. 7b gestrichelt dargestellten Druckverlauf wurde die Hochlage 21 nicht wieder erreicht. Dadurch wird der Anhebevorgang früher abgeschlossen. Die Druckerhöhung 46 nimmt früher wieder ab. Dadurch kann der erfasste Druckverlauf zur Prüfung der Funktionsfähigkeit zumindest dahingehend überprüft werden, ob die Magnetschienenbremse 2 die Hochlage 21 wieder erreicht hat.

Bei dem in Fig. 5c gestrichelt dargestellten Druckverlauf wurde die Schienenoberfläche oder untere Endlage 22 nicht erreicht oder die Spule des Elektromagneten 6 wurde nicht bestromt. Dadurch konnte der Schleifschuh nicht an der Schienenoberfläche haften und es ergibt sich ein Druckverlauf ähnlich wie in Fig. 5d. Insbesondere stellt sich die charakteristische Druckerhöhung 46 nicht ein. Dadurch kann der erfasste Druckverlauf zur Prüfung der Funktionsfähigkeit zumindest dahingehend überprüft werden, ob die Magnetschienenbremse 2 eine Schienenoberfläche 21 erreicht hat oder ob ein Elektromagnet 6 der Magnetschienenbremse 2 bestromt wurde.

In den vorherigen Beispielen wird eine Wirküberwachung in Form einer Prüfung der Funktionsfähigkeit der Magnetschienenbremse beschrieben. Allerdings sind die beschriebenen Beispiele analog auf ein Prüfen des Verschleißzustandes der Magnetschienenbremse, übertragbar.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Wirküberwachung einer Magnetschienenbremse (2), das Verfahren umfassend:
- Erfassen eines Druckverlaufs repräsentativ für einen Druck einer pneumatischen Betätigungseinrichtung (12) der Magnetschienenbremse (2);
- Prüfen, zumindest teilweise basierend auf dem erfassten Druckverlauf, ob eine Funktionsfähigkeit der Magnetschienenbremse (2) gegeben ist und/oder eine Verschleißgrenze der Magnetschienenbremse erreicht ist.

2. Verfahren nach Anspruch 1, wobei das Verfahren weiterhin umfasst:
- Auslösen eines Anhebens der Magnetschienenbremse (2) mittels der pneumatischen Betätigungseinrichtung (12), wobei der Druckverlauf repräsentativ für einen Druck zumindest teilweise während des Anhebens oder des versuchten Anhebens der Magnetschienenbremse (2) mittels der pneumatischen Betätigungseinrichtung (12) ist.

3. Verfahren nach Anspruch 2, wobei das Anheben oder das versuchte Anheben der Magnetschienenbremse mittels der pneumatischen Betätigungseinrichtung (12) durch eine Entlüftung, insbesondere eine gedrosselte Entlüftung, der pneumatischen Betätigungseinrichtung (12) erfolgt.

4. Verfahren nach Anspruch 2 oder 3, wobei das Verfahren weiterhin umfasst:
- Bestromen eines Elektromagneten (6) der Magnetschienenbremse (2); und
- anschließendes Abschalten der Bestromung des Elektromagneten (6) der Magnetschienenbremse (2).

5. Verfahren nach Anspruch 4, wobei das Abschalten der Bestromung gemeinsam mit dem Auslösen des Anhebens der Magnetschienenbremse (2) mittels der pneumatischen Betätigungseinrichtung (12) oder nach dem Auslösen des Anhebens der Magnetschienenbremse (2) mittels der pneumatischen Betätigungseinrichtung (12) erfolgt.

6. Verfahren nach einem der Ansprüche 1 bis 5, wobei das Verfahren weiterhin umfasst:
- Feststellen, dass eine Funktionsfähigkeit der Magnetschienenbremse (2) gegeben ist und/oder eine vordefinierte Verschleißgrenze der Magnetschienenbremse (2) nicht erreicht wurde, wenn der erfasste Druckverlauf zumindest teilweise einem erwarteten Druckverlauf hinreichend entspricht, und/oder
- Feststellen, dass eine Funktionsfähigkeit der Magnetschienenbremse (2) nicht gegeben ist und/oder eine vordefinierte Verschleißgrenze der Magnetschienenbremse (2) erreicht wurde, wenn der erfasste Druckverlauf zumindest teilweise einem erwarteten Druckverlauf nicht hinreichend entspricht.

7. Verfahren nach einem der Ansprüche 1 bis 6, wobei der erfasste Druckverlauf zur Prüfung der Funktionsfähigkeit zumindest dahingehend überprüft wird, ob die Magnetschienenbremse (2) eine Hochlage (21) verlassen hat.

8. Verfahren nach einem der Ansprüche 1 bis 7, wobei der erfasste Druckverlauf zur Prüfung der Funktionsfähigkeit zumindest dahingehend überprüft wird, ob die Magnetschienenbremse (2) eine Schienenoberfläche erreicht hat.

9. Verfahren nach einem der Ansprüche 1 bis 8, wobei der erfasste Druckverlauf zur Prüfung der Funktionsfähigkeit zumindest dahingehend überprüft wird, ob die Magnetschienenbremse (2) eine Hochlage (21) erreicht hat.

10. Verfahren nach einem der Ansprüche 1 bis 9, wobei der erfasste Druckverlauf zur Prüfung der Funktionsfähigkeit zumindest dahingehend überprüft wird, ob ein Elektromagnet (6) der Magnetschienenbremse (2) bestromt wurde.

11. Vorrichtung, welche dazu eingerichtet ist oder entsprechende Mittel aufweist, ein Verfahren nach einem der Ansprüche 1 bis 10 durchzuführen und/oder zu steuern.

12. Vorrichtung, insbesondere zur Durchführung eines Verfahrens nach einem der Ansprüche 1 bis 10, wobei die Vorrichtung umfasst:
- eine Magnetschienenbremse (2), umfassend eine pneumatische Betätigungseinrichtung (12),
- eine Drucksensoreinheit (24), und
- eine Auswerteeinheit (26),
wobei die Drucksensoreinheit (24) dazu eingerichtet ist, einen Druckverlauf repräsentativ für den Druck der pneumatischen Betätigungseinrichtung (12) der Magnetschienenbremse (2) zu erfassen, und
wobei die Auswerteeinheit (26) dazu eingerichtet ist, zu prüfen, zumindest teilweise basierend auf dem erfassten Druckverlauf, ob eine Funktionsfähigkeit der Magnetschienenbremse (2) gegeben ist und/oder ob eine Verschleißgrenze der Magnetschienenbremse (2) erreicht ist.

13. Vorrichtung nach Anspruch 12, wobei die pneumatische Betätigungseinrichtung (12) weiterhin zumindest eine pneumatische Zuführung (16) umfasst, wobei die Drucksensoreinheit (24) insbesondere im Bereich der pneumatischen Zuführung (16) angeordnet ist.

14. Vorrichtung nach Anspruch 12 oder 13, wobei die Magnetschienenbremse weiterhin einen Elektromagneten (6) umfasst und wobei die Vorrichtung weiterhin umfasst:
- zumindest eine elektrische Zuführung (8) zur Bestromung des Elektromagneten (6) der Magnetschienenbremse (2).

15. Schienenfahrzeug oder Teil hiervon, welches eine Vorrichtung nach einem der Ansprüche 11 bis 14 aufweist.

## Claims

1. Method for monitoring the effectiveness of a magnetic rail brake (2), comprising the method:
- recording a pressure curve representative of a pressure of a pneumatic actuating device (12) of the magnetic rail brake (2);
- checking, at least partially based on the detected pressure curve, whether an operability of the magnetic rail brake (2) is given and/or whether a wear limit of the magnetic rail brake has been reached.

2. A method according to claim 1, wherein the method further comprises
- triggering a lifting of the magnetic rail brake (2) by means of the pneumatic actuating device (12), wherein the pressure curve is representative of a pressure at least partially during the lifting or attempted lifting of the magnetic rail brake (2) by means of the pneumatic actuating device (12).

3. Method according to claim 2, wherein the lifting or attempted lifting of the magnetic rail brake by means of the pneumatic actuating device (12) is effected by a venting, in particular a throttled venting, of the pneumatic actuating device (12).

4. A method according to claim 2 or 3, wherein the method further comprises
- energizing an electromagnet (6) of the magnetic rail brake (2); and
- subsequently switch off the current supply to the electromagnet (6) of the magnetic rail brake (2).

5. Method according to claim 4, wherein the switching off of the current supply is carried out together with the triggering of the lifting of the magnetic rail brake (2) by means of the pneumatic actuating device (12) or after the triggering of the lifting of the magnetic rail brake (2) by means of the pneumatic actuating device (12).

6. A method according to any one of claims 1 to 5, said method further comprising
- determining that an operability of the magnetic rail brake (2) is given and/or a predefined wear limit of the magnetic rail brake (2) has not been reached if the detected pressure curve at least partially corresponds sufficiently to an expected pressure curve, and/or
- determining that an operability of the magnetic rail brake (2) is not given and/or a predefined wear limit of the magnetic rail brake (2) has been reached if the detected pressure curve does not sufficiently correspond, at least in part, to an expected pressure curve.

7. Method according to any one of claims 1 to 6, wherein the detected pressure curve is checked for testing the operability at least to determine whether the magnetic rail brake (2) has left a high position (21).

8. Method according to any one of claims 1 to 7, wherein the detected pressure curve is checked for testing the operability at least to determine whether the magnetic rail brake (2) has reached a rail surface.

9. Method according to any one of claims 1 to 8, wherein the detected pressure curve is checked for testing the operability at least to determine whether the magnetic rail brake (2) has reached a high position (21).

10. Method according to one of claims 1 to 9, wherein the detected pressure curve is checked for testing the operability at least to determine whether an electromagnet (6) of the magnetic rail brake (2) has been energized.

11. Apparatus which is arranged or has corresponding means for carrying out and/or controlling a process according to one of claims 1 to 10.

12. Apparatus, in particular for carrying out a process according to one of claims 1 to 10, said apparatus comprising
- a magnetic rail brake (2) comprising a pneumatic actuating device (12),
- a pressure sensor unit (24), and
- an evaluation unit (26),
wherein the pressure sensor unit (24) is adapted to detect a pressure curve representative of the pressure of the pneumatic actuating device (12) of the magnetic rail brake (2), and
wherein the evaluation unit (26) is arranged to check, at least partially based on the detected pressure curve, whether an operability of the magnetic rail brake (2) is given and/or whether a wear limit of the magnetic rail brake (2) is reached.

13. Apparatus according to claim 12, wherein the pneumatic actuating device (12) further comprises at least one pneumatic feed (16), wherein the pressure sensor unit (24) is arranged in particular in the region of the pneumatic feed (16).

14. An apparatus according to claim 12 or 13, wherein the magnetic rail brake further comprises an electromagnet (6) and wherein the apparatus further comprises
- at least one electrical supply (8) for energizing the electromagnet (6) of the magnetic rail brake (2).

15. A railway vehicle or part thereof having a device according to any one of claims 11 to 14.

## Revendications

1. Procédé pour la surveillance de l'efficacité d'un frein sur rail magnétique (2), ce procédé comprenant :
- la mesure d'un tracé de pression représentatif d'une pression d'un dispositif d'actionnement pneumatique (12) du frein sur rail magnétique (2) ;
- la vérification, au moins partiellement sur la base du tracé de pression mesuré, si le frein sur rail magnétique (2) est fonctionnel et/ou si une limite d'usure du frein sur rail magnétique est atteinte.

2. Procédé selon la revendication 1, ce procédé comprenant en outre :
- le déclenchement d'un relevage du frein sur rail magnétique (2) au moyen du dispositif d'actionnement pneumatique (12), le tracé de la pression étant représentatif d'une pression au moins partiellement pendant le relevage ou la tentative de relevage du frein sur rail magnétique (2) au moyen du dispositif d'actionnement pneumatique (12).

3. Procédé selon la revendication 2, le relevage ou la tentative de relevage du frein sur rail magnétique au moyen du dispositif d'actionnement pneumatique (12) a lieu grâce à une purge, plus particulièrement une purge contrôlée, du dispositif d'actionnement pneumatique (12).

4. Procédé selon la revendication 2 ou 3, ce procédé comprenant en outre :
- l'alimentation d'un électro-aimant (6) du frein sur rail magnétique (2) ; et
- l'arrêt de l'alimentation de l'électro-aimant (6) du frein sur rail magnétique (2).

5. Procédé selon la revendication 4, l'arrêt de l'alimentation ayant lieu en même temps que le déclenchement du relevage du frein sur rail magnétique (2) au moyen du dispositif d'actionnement pneumatique (12) ou après le déclenchement du relevage du frein sur rail magnétique (2) au moyen du dispositif d'actionnement pneumatique (12).

6. Procédé selon l'une des revendications 1 à 5, ce procédé comprenant en outre :
- la constatation que le frein sur rail magnétique (2) est fonctionnel et/ou qu'une limite d'usure du frein sur rail magnétique (2) n'a pas été atteinte, lorsque le tracé de pression mesuré correspond suffisamment au moins partiellement à un tracé de pression attendu et/ou
- la constatation que le frein sur rail magnétique (2) n'est pas fonctionnel et/ou qu'une limite d'usure du frein sur rail magnétique (2) a été atteinte, lorsque le tracé de pression mesuré ne correspond pas suffisamment au moins partiellement à un tracé de pression attendu.

7. Procédé selon l'une des revendications 1 à 6, le tracé de pression mesuré étant d'autre part vérifié pour le contrôle de la fonctionnalité si le frein sur rail magnétique (2) a quitté une position haute (21).

8. Procédé selon l'une des revendications 1 à 7, le tracé de pression mesuré étant d'autre part vérifié pour le contrôle de la fonctionnalité si le frein sur rail magnétique (2) a atteint une surface du raiL

9. Procédé selon l'une des revendications 1 à 8, le tracé de pression mesuré étant d'autre part vérifié pour le contrôle de la fonctionnalité si le frein sur rail magnétique (2) a atteint une position haute (21).

10. Procédé selon l'une des revendications 1 à 9, le tracé de pression mesuré étant d'autre part vérifié pour le contrôle de la fonctionnalité si un électro-aimant (6) du frein sur rail magnétique (2) a été alimenté.

11. Dispositif qui est conçu ou qui comprend des moyens correspondant pour exécuter et/ou contrôler un procédé selon l'une des revendications 1 à 10.

12. Dispositif, plus particulièrement pour l'exécution d'un procédé selon l'une des revendications 1 à 10, ce dispositif comprenant :
- un frein sur rail magnétique (2) comprenant un dispositif d'actionnement pneumatique (12),
- une unité de capteur de pression (24) et
- une unité d'analyse (26),
l'unité de capteur de pression (24) étant conçue pour mesurer un tracé de pression représentatif de la pression du dispositif d'actionnement pneumatique (12) du frein sur rail magnétique (2) et
l'unité d'analyse (26) étant conçue pour vérifier, au moins partiellement sur la base du tracé de pression mesuré, si le frein sur rail magnétique (2) est fonctionnel et/ou si une limite d'usure du frein sur rail magnétique (2) est atteinte.

13. Dispositif selon la revendication 12, le dispositif d'actionnement pneumatique (12) comprenant en outre au moins une alimentation pneumatique (16), l'unité de capteur de pression (24) étant disposée plus particulièrement au niveau de l'alimentation pneumatique (16).

14. Dispositif selon la revendication 12 ou 13, le frein sur rail magnétique comprenant en outre un électro-aimant (6) et le dispositif comprenant en outre :
- au moins une alimentation électrique (8) pour l'alimentation de l'électro-aimant (6) du frein sur rail magnétique (2).

15. Véhicule ferroviaire ou une partie de celui-ci, qui comprend un dispositif selon l'une des revendications 11 à 14.
